(19) Europäisches Patentamt
European Patent Office
Office européen des brevets

(11) **EP 4 039 990 B1**

(12) **EUROPÄISCHE PATENTSCHRIFT**

(45) Veröffentlichungstag und Bekanntmachung des Hinweises auf die Patenterteilung:
**11.10.2023 Patentblatt 2023/41**

(21) Anmeldenummer: **22154400.0**

(22) Anmeldetag: **01.02.2022**

(51) Internationale Patentklassifikation (IPC):
**F16B 13/06** (2006.01)

(52) Gemeinsame Patentklassifikation (CPC):
**F16B 13/065**

(54) **SPREIZANKER**

EXPANSION ANCHOR

ANCRE D'EXPANSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2021 DE 102021102770**
**29.11.2021 DE 102021131192**

(43) Veröffentlichungstag der Anmeldung:
**10.08.2022 Patentblatt 2022/32**

(73) Patentinhaber: **fischerwerke GmbH & Co. KG**
**72178 Waldachtal (DE)**

(72) Erfinder: **Zhu, Feng**
**72250 Freudenstadt (DE)**

(74) Vertreter: **Suchy, Ulrich Johannes**
**fischerwerke GmbH & Co. KG**
**Gewerbliche Schutzrechte**
**Klaus-Fischer-Strasse 1**
**72178 Waldachtal (DE)**

(56) Entgegenhaltungen:
**EP-A1- 0 514 342     DE-A1-102016 110 162**
**DE-A1-102017 121 232**

EP 4 039 990 B1

**Beschreibung**

Die Erfindung betrifft einen Spreizanker mit den Merkmalen des Oberbegriffs des Anspruchs 1.

Derartige Spreizanker, die aus Stahl hergestellt sind, werden auch Bolzenanker genannt. Ein typischer Bolzenanker ist aus der Druckschrift EP 0 514 342 A1 bekannt. Der Bolzenanker weist einen Ankerbolzen auf, der sich entlang einer Längsachse erstreckt, und der einen konischen Spreizkörper umfasst, mit dem eine Spreizhülse des Bolzenankers durch Einziehen in die Spreizhülse aufgespreizt werden kann. Beim Aufspreizen werden Spreizsegmente der Spreizhülse durch den Spreizkörper gegen die Wand eines Bohrlochs gepresst, in dem der Bolzenanker verankert werden soll. Um ein Nachspreizen des Bolzenankers bei einer möglichen Aufweitung des Bohrlochs zu gewährleisten, wie dies beim Entstehen von Rissen in der Zugzone eines Bauteils vorkommen kann, ist auf dem Spreizkörper eine reibungsmindernde Gleitbeschichtung in Form eines Gleitlacks angeordnet. Dies erfordert einen zusätzlichen Bearbeitungsschritt bei der Herstellung dieses zugzonentauglichen Spreizankers, was den Spreizanker verteuert.

Aus der Offenlegungsschrift DE 10 2017 121 232 A1 ist bekannt, dass alternativ zu einer Gleitbeschichtung eine spezielle geometrische Ausgestaltung des Spreizkörpers und der Spreizhülse das Nachspreizverhalten eines Bolzenankers verbessert.

Aufgabe der Erfindung ist, die Leistungsfähigkeit eines zugzonentauglichen Spreizankers, der keine spezielle Gleitbeschichtung zwischen dem Spreizkörper und der Spreizhülse aufweist, weiter zu verbessern.

Diese Aufgabe wird erfindungsgemäß durch einen Spreizanker mit den Merkmalen des Anspruchs 1 gelöst. Der Spreizanker ist zum Verankern in einem Bohrloch in einem Verankerungsgrund vorgesehen und dient dazu, einen Gegenstand an dem Verankerungsgrund zu befestigen.

Der erfindungsgemäße Spreizanker aus Stahl weist einen Ankerbolzen und eine Spreizhülse auf. Der Ankerbolzen erstreckt sich entlang einer Längsachse von einem hinteren Ende zu einem einbringseitig vorderen Ende. Mit "einbringseitig vorderen Ende" ist das Ende gemeint, das bei einem planmäßigen Einbringen des Spreizankers in das Bohrloch als erstes in das Bohrloch eingesteckt wird. Entlang der Längsachse erstreckt sich ein Schaft des Ankerbolzens, der ein Lastangriffsmittel aufweist. Das Lastangriffsmittel ist insbesondere ein Außengewinde, auf das in Richtung der Längsachse eine Mutter aufschraubbar ist, kann aber beispielsweise auch ein Innengewinde oder ein nagelartiger Kopf sein, wobei diese Aufzählung nicht abschließend ist. Einbringseitig vor dem Lastangriffsmittel ist ein Spreizkörper des Ankerbolzens zum Schaft unbeweglich und vorzugsweise einstückig mit dem Schaft angeordnet. Der Spreizkörper erweitert sich zum einbringseitig vorderen Ende des Ankerbolzens hin in einem Spreizabschnitt konisch mit einem ersten Konuswinkel Ws bis zu einem maximalen Durchmesser D des Spreizkörpers. "Konisch" meint hier nicht nur eine streng mathematisch kegelstumpfförmige Gestalt, sondern umfasst auch nichtkreisförmige Querschnitte und eine nicht-lineare Erweiterung. Entsprechend kann der Winkel zur Längsachse entlang dem Spreizkörper variieren. Mit dem "ersten Konuswinkel $W_S$" ist hier bei variierendem Winkel der durchschnittliche Winkel des Spreizabschitts bezogen auf die Längsachse des Spreizankers gemeint. Dementsprechend ist bei einem kegelstumpfförmigen Spreizkörper der eingeschlossene Kegelwinkel doppelt so groß wie der erste Konuswinkel Ws.

Der Spreizanker weist zudem eine Spreizhülse auf, die am Ankerbolzen angeordnet ist. Insbesondere ist die Spreizhülse an einem im Durchmesser reduzierten Halsbereich zwischen dem Lastangriffsmittel und dem Spreizkörper angeordnet, wobei insbesondere der minimale Durchmesser des Spreizkörpers dem Durchmesser des Halsbereichs entspricht. Die Spreizhülse ist durch eine Verschiebung des Ankerbolzens relativ zur Spreizhülse und einem durch die Relativverschiebung resultierenden Einziehen des Spreizabschnitts in die Spreizhülse aufspreizbar. Dabei wird nicht notwendigerweise die gesamte Spreizhülse aufgespreizt, sondern Spreizsegmente der Spreizhülse. Die Spreizsegmente sind einbringseitig kragarmförmig an einem ringförmigen Abschnitt der Spreizhülse angeordnet, in Umfangsrichtung voneinander durch Schlitze beabstandet und über den ringförmigen Abschnitt miteinander verbunden. Beim Aufspreizen vergrößert sich der Durchmesser der Spreizhülse im Bereich der Spreizsegmente, das heißt, die freien Enden der Spreizsegmente werden radial zur Längsachse nach außen bewegt beziehungsweise nach außen gebogen.

Die Spreizsegmente umfassen jeweils einen Grundkörper, der eine erste Wanddicke $t_G$ aufweist. An den Grundkörper ist einbringseitig ein Fortsatz mit einer gegenüber der ersten Wanddicke um einen Dickenunterschied dt reduzierten zweiten Wanddicke $t_F$ angeordnet, der das freie Ende des kragarmförmigen Spreizsegments bildet. Der Fortsatz erstreckt sich in Umfangsrichtung im Wesentlichen gleich weit wie der Grundkörper. Insbesondere verlaufen die die Spreizsegmente trennenden Schlitze parallel zueinander und insbesondere zudem parallel zur Längsachse. Insbesondere weist die Spreizhülse eine im Wesentlichen zylinderförmige Außenfläche auf.

Insbesondere ist die Wanddicke $t_G$ des Grundkörpers und die Wanddicke $t_F$ des Fortsatzes jeweils im Wesentlichen konstant. "Im Wesentlichen" schließt hier Abweichungen von je bis zu zehn Prozent in beide Richtungen ein. Bei variierender Wanddicke des Grundkörpers ist mit der ersten Wanddicke $t_G$ die durchschnittliche Wanddicke in diesem Bereich gemeint. Ebenso ist bei variierender Wanddicke des Fortsatzes mit der zweiten Wanddicke $t_F$ die durchschnittliche Wanddicke in diesem Bereich gemeint.

Der Übergang vom Grundkörper des Spreizsegments zum Fortsatz wird durch eine Durchmesserstufe auf der Außenseite der Spreizhülse gebildet, die eine Höhe aufweist, die dem Dickenunterschied dt entspricht. Insbesondere weist der Grundkörper im Bereich der Durchmesserstufe im Wesentlichen die erste Wanddicke $t_G$ und der Fortsatz im Wesentlichen die zweite Wanddicke $t_F$ auf. Die Wanddicken sowie die Höhe der Durchmesserstufe werden senkrecht zur Längsachse des Ankerbolzens gemessen. Die Durchmesserstufe wird durch eine Stufenfläche gebildet, die insbesondere in einer Radialebene zur Längsachse liegt. Anders ausgedrückt verläuft ein Normalenvektor der Stufenfläche insbesondere parallel zur Längsachse des Ankerbolzens. Der Normalenvektor der Stufenfläche kann aber auch nach außen weg zur Längsachse geneigt sein, insbesondere maximal um bis zu 70 Grad, insbesondere um maximal 45 Grad, insbesondere um maximal 20 Grad, insbesondere um maximal 10 Grad, so dass eine erste Kante, die auf der Außenseite durch den Übergang von der Außenseite des Grundkörpers zur Stufenfläche als eine Art Außeneck gebildet wird, möglichst scharfkantig ist, wodurch eine gutes Einschneiden der ersten Kante in die Wand des Bohrlochs, in dem der Spreizanker befestigt werden soll, gewährleistet ist. Die Stufenfläche selbst ist Teil des Fortsatzes. Im Übergangsbereich zwischen der Stufenfläche und der Außenseite des Fortsatzes ist eine Art Innenecke gebildet, die insbesondere in einer Radialebene mit der ersten Kante liegt, wenn der Normalenvektor der Stufenfläche parallel zur Längsachse verläuft, oder einbringseitig vor der ersten Kante angeordnet ist, wenn der Normalenvektor der Stufenfläche nach außen weg von der Längsachse gerichtet ist. Das einbringseitig vordere Ende des Fortsatzes bildet auf der Außenseite eine zweite Kante, wieder als eine Art Außeneck, die, abhängig von der Ausgestaltung des Fortsatzes, ebenfalls in die Wand des Bohrlochs einschneiden kann. Auf der Außenseite des Fortsatzes kann zudem lokal ein umlaufender Steg, eine Schneide oder ähnliches angeordnet sein, der eine weitere Kante zum Einschneiden bildet.

Der Fortsatz ist zu einem leichten Aufgleiten auf den Spreizkörper beim Einziehen auf seiner dem Ankerbolzens zugewandten Innenseite zumindest einbringseitig mit einem zweiten Konuswinkel $W_F$ zur Längsachse geneigt, wobei hier "konisch" wiederum nicht streng mathematisch kegelstumpfförmig meint. Insbesondere entspricht der zweite Konuswinkel $W_F$ des Fortsatzes im Wesentlichen dem ersten Konuswinkel $W_S$ des Spreizkörpers.

Bevorzugt weist der Fortsatz eine zur Innenseite im Wesentlichen parallele Außenseite auf.

Die Spreizhülse ist insbesondere als Stanzbiegeteil einstückig aus einem dünnwandigen Stahlblech oder -band hergestellt. Die Reduktion der Wanddicke an der Durchmesserstufe erfolgt insbesondere durch Kaltumformen des Stahls, was zu einer erhöhten Festigkeit des Stahls im Bereich der Durchmesserstufe und dem Fortsatz führt, wodurch ein Einschneiden des Fortsatzes beziehungsweise der Durchmesserstufe in die Bohrlochwand erleichtert wird.

Zwischen dem Spreizkörper und der Spreizhülse ist erfindungsgemäß keine Gleitbeschichtung angeordnet. Mit einer "Gleitbeschichtung" ist hier eine Beschichtung auf organischer Basis gemeint, insbesondere ein Lack, aber keine anorganische Beschichtung, wie beispielsweise eine Verzinkung. Eine solche anorganische Beschichtung ist insbesondere bei erfindungsgemäßen Spreizankern aus Nicht-Edelstahl als Korrosionsschutz vorgesehen und dienen im Sinne der Erfindung nicht als Gleitbeschichtung.

Ist der Spreizanker in ein Bohrloch eingebracht, so werden durch das Einziehen des Spreizkörpers in die Spreizhülse die Spreizsegmente aufgespreizt und zumindest die erste Kante so gegen die Wand des Bohrlochs gedrückt, dass die Kante in die Wand einschneidet, wodurch die Spreizhülse einen festen Halt im Bohrloch findet.

Kennzeichnend für den erfindungsgemäßen Spreizanker ist, dass für den Abstand dL zwischen dem Grundkörper und dem einbringseitig vorderen Ende des Fortsatzes gilt:

$$dL \leq dt / \tan(W_S + W_F) \qquad \text{(Bedingung 1)}$$

Die Länge des Fortsatzes dL von der ersten Kante bis zur zweiten Kante darf somit eine Länge dL nicht überschreiten, die aus dem Quotienten des Dickenunterschieds dt und dem Tangens aus der Summe der beiden Konuswinkel $W_S$ und $W_F$ gebildet wird. Dabei wird die Länge dL parallel zur Längsachse des Ankerbolzens gemessen. Durch die Einhaltung der Bedingung 1 ist gewährleistet, dass der erfindungsgemäße Spreizanker große Kräfte auch dann in einen Verankerungsgrund eintragen kann, wenn im Bereich des Bohrlochs Risse entstanden sind und das Bohrloch dadurch aufgeweitet wurde. Der erfindungsgemäß ausgestaltete Fortsatz wirkt als eine Art Schlitten, der bewirkt, dass die Spreizhülse gut auf dem Spreizkörper gleiten und somit nachspreizen kann, wenn im Bereich des Bohrlochs, in das der Spreizanker eingebracht wurde, ein Riss entstanden ist, der aber ein Einschneiden der ersten Kante nicht behindert.

Die beiden Konuswinkel sind insbesondere größer als 5°, insbesondere größer als 7°.

Um ein besonders vorteilhaftes Spreizverhalten zu gewährleisten, gilt vorzugsweise für den ersten Konuswinkel $W_S \leq 20°$, insbesondere gilt $W_S \leq 15°$.

Für die Summe aus erstem Konuswinkel und zweitem Konuswinkel gilt vorzugsweise $(W_S + W_F) \leq 40°$, insbesondere $(W_S + W_F) \leq 30°$.

Weiterhin ist bevorzugt, dass zudem gilt:

$$dL \geq (t_G - dt) \qquad \text{(Bedingung 2)}$$

Dies bedeutet, dass die Länge dL des Fortsatzes von der ersten Kante bis zur zweiten Kante mindestens so groß ist, wie die Differenz aus der ersten Wanddicke $t_G$ und dem Dickenunterschied dt, wodurch er besonders gut als eine Art Schlitten wirken kann.

Weiterhin ist bevorzugt, dass für die erste Wanddicke $t_G$ des Grundkörpers gilt:

$$0{,}08 * D + 0{,}20 \text{ mm} \leq t_G \leq 0{,}13 * D + 0{,}25 \text{ mm} \qquad \text{(Bedingung 3)}$$

Das bedeutet, dass die erste Wanddicke $t_G$ des Grundkörpers größer als oder gleich groß wie die Summe aus dem 0,08-fachen des maximalen Durchmessers des Spreizabschnitts in Millimetern und 0,02 Millimeter ist. Zudem soll die erste Wanddicke gleich groß wie oder kleiner sein als die Summe des 0,13-fachen des maximalen Durchmessers des Spreizabschnitts in Millimetern und 0,25 Millimeter.

Weiterhin ist bevorzugt, dass für die zweite Wanddicke $t_F$ des Fortsatzes gilt:

$$0{,}26 * t_G + 0{,}03 \text{ mm} \leq t_F \leq 0{,}60 * t_G + 0{,}30 \text{ mm} \qquad \text{(Bedingung 4)}$$

Das bedeutet, dass die zweite Wanddicke $t_F$ des Fortsatzes größer als oder gleich groß wie die Summe aus dem 0,26-fachen der ersten Wanddicke $t_G$ des Grundkörpers in Millimetern und 0,03 Millimeter ist. Zudem soll die erste Wanddicke gleich groß wie oder kleiner sein als die Summe des 0,60-fachen der ersten Wanddicke $t_G$ des Grundkörpers in Millimetern und 0,30 Millimeter.

Vorzugsweise gilt für den ersten Konuswinkel $W_S$ des Spreizkörpers:

$$0{,}11° * D/\text{mm} + 8{,}83° \leq W_S \leq 0{,}17° * D/\text{mm} + 11{,}50° \qquad \text{(Bedingung 5)}$$

Das bedeutet, dass der erste Konuswinkel $W_S$ des Spreizabschnitts größer als oder gleich groß wie die Summe aus dem 0,11-fachen des maximalen Durchmessers des Spreizabschnitts in Millimetern und 8,83 Grad ist. Zudem soll der erste Konuswinkel $W_S$ gleich groß wie oder kleiner sein als die Summe des 0,17-fachen des maximalen Durchmessers des Spreizabschnitts in Millimetern und 11,50 Grad.

Bei einer weiteren bevorzugten Ausgestaltungsform mit besonders guter Leistungsfähigkeit ist der Dickenunterschied dt zwischen der ersten Wanddicke $t_G$ der zweiten Wanddicke $t_F$ im Wesentlichen gleich groß wie der Abstand dL zwischen dem Grundkörper und dem einbringseitig vorderen Ende des Fortsatzes. "Im Wesentlichen" meint hier insbesondere eine Abweichung von nicht mehr als 25 %, insbesondere von nicht mehr als 10 %, insbesondere eine Abweichung im Rahmen üblicher Fertigungstoleranzen.

Vorzugsweise weist die Spreizhülse eine Nase auf, die am Grundkörper angeordnet ist und die radial von der Außenseite des Grundköpers absteht, wobei der Abstand A der Nase, insbesondere des radial am weitesten überstehenden Teils der Nase, vom einbringseitig vorderen Ende des Fortsatzes größer oder gleich dem halben maximalen Durchmesser D des Spreizabschnitts ist. Somit gilt:

$$A \geq 0{,}5 * D \qquad \text{(Bedingung 6)}$$

Mit "Nase" ist hier ein lokal begrenzter Vorsprung auf dem Grundkörper gemeint, die dazu dient, bereits vor dem Aufspreizen und/oder zu Beginn des Aufspreizens mit der Wand des Bohrlochs in Kontakt zu sein und zu verhindern, dass die Spreizhülse durch die Bewegung des Spreizkörpers mit dem Spreizkörper im Bohrloch mitbewegt wird, so dass es zu keinem Einziehen des Spreizkörpers in die Spreizhülse und somit zu keinem Aufspreizen kommt. Der radiale Überstand über die Außenseite des Grundkörpers beträgt insbesondere maximal die Hälfte der ersten Wanddicke $t_G$ des Grundkörpers, insbesondere ein Viertel der ersten Wanddicke $t_G$ des Grundkörpers.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels aufweisen, sind möglich.

Die Erfindung wird nachfolgend anhand eines in der Zeichnung dargestellten Ausführungsbeispiels näher erläutert.

Es zeigen:

Figur 1 einen erfindungsgemäßen Spreizanker in einer Seitenansicht; und

Figuren 2, 3 vergrößerte Ausschnitte des einbringseitig vorderen Teils des erfindungsgemäßen Spreizankers aus Figur 1 in teilweise geschnittenen Seitenansichten.

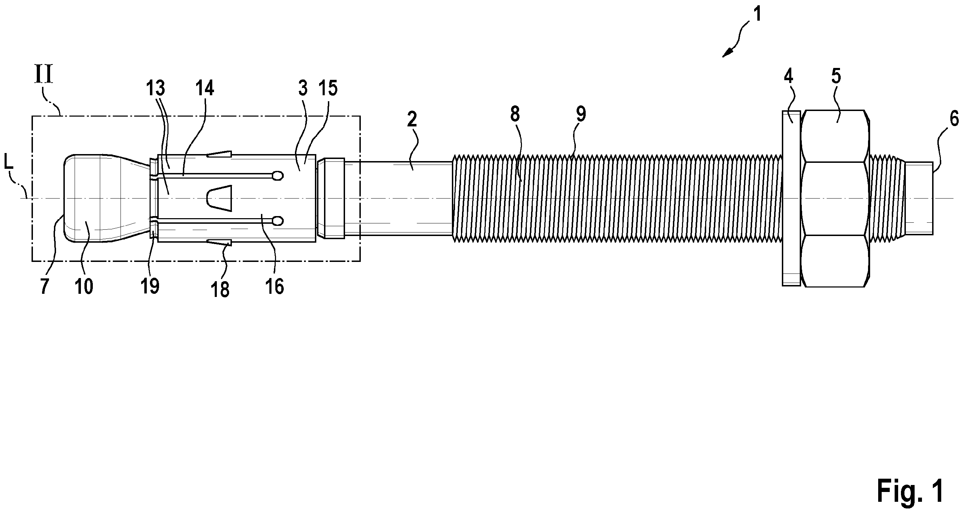

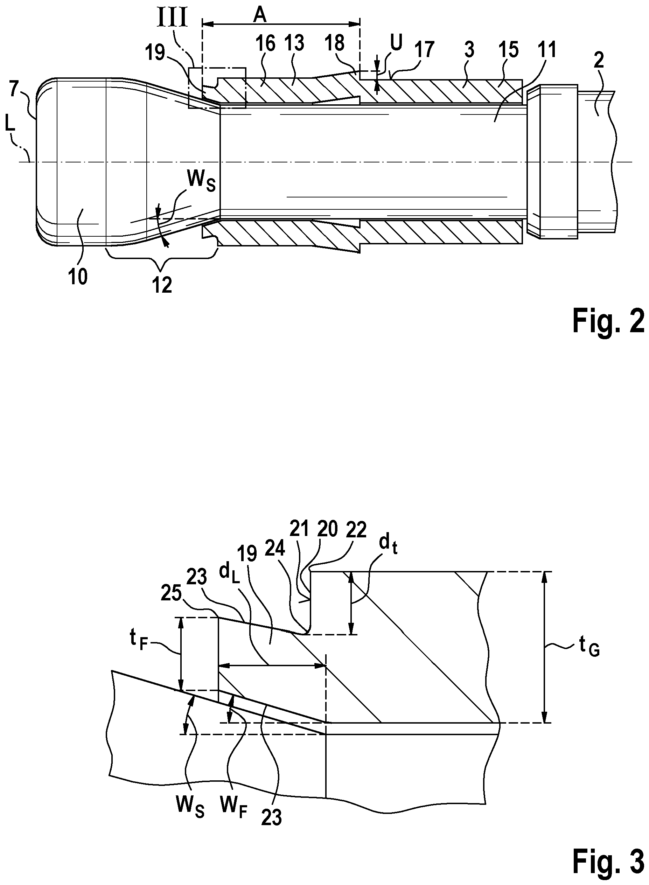

In den Figuren 1 bis 3 ist ein erfindungsgemäßer Spreizanker 1 dargestellt, der einen Ankerbolzen 2, eine Spreizhülse 3, eine Unterlegscheibe 4 und eine Mutter 5 umfasst. Der Ankerbolzen 2 erstreckt sich entlang einer Längsachse L von einem hinteren Ende 6 zu einem einbringseitig vorderen Ende 7. Der Ankerbolzens 2 umfasst einen Schaft 8 mit einem Lastangriffsmittel 9, das als Außengewinde ausgebildet ist und an dem die Unterlegscheibe 4 und die Mutter 5 angeordnet sind. Einbringseitig vor dem Lastangriffsmittel 9 ist ein Spreizkörper 10 angeordnet, der einstückig mit einem Halsabschnitt 11 des Schafts 8 und damit unbeweglich mit dem Schaft 8 verbunden ist. Der Halsabschnitt 11 weist einen im Vergleich zum Lastangriffsmittel 9 reduzierten Außendurchmesser auf, der dem kleinsten Außendurchmesser des Spreizkörpers 10 entspricht. Ausgehend von diesem Außendurchmesser erweitert sich der Spreizkörper 10 zum einbringseitig vorderen Ende 7 des Ankerbolzens 2 hin in einem Spreizabschnitt 12 mit einem ersten Konuswinkel $W_S$ von 11° bis zu einem maximalen Durchmesser D von 11,8 Millimeter.

Die Spreizhülse 3 des Spreizankers 1 ist um den Halsabschnitt 11 herumgebogen, und relativ zum Ankerbolzen 2 zum einbringseitigen Ende 7 hin entlang der Längsachse L verschiebbar. Anders ausgedrückt bedeutet dies, dass der Spreizabschnitt 12 relativ zur Spreizhülse 3 entlang der Längsachse L bewegt werden kann, wodurch der Spreizabschnitt 12 zumindest teilweise in die Spreizhülse 3 eingezogen wird, wodurch Spreizsegmente 13 der Spreizhülse 3 aufgespreizt werden. Die Spreizhülse 3 weist drei Spreizsegmente 13 auf, die durch parallel zueinander und zur Längsachse L verlaufende Schlitze 14 in Umfangsrichtung voneinander getrennt und durch einen hinteren ringförmigen Abschnitt 15 miteinander verbunden sind. Das heißt, die Spreizsegmente 13 stehen einbringseitig vom ringförmigen Abschnitt 15 kragarmförmig ab.

Die Spreizsegmente 13 umfassen jeweils einen Grundkörper 16, der mit dem ringförmigen Abschnitt 15 verbunden ist. Der Grundkörper 16 weist eine erste Wanddicke $t_G$ von 1,6 Millimeter auf. Auf einer Außenseite 17 des Grundkörpers 16 ist eine Nase 18 angeordnet, die aus dem Grundkörper 16 nach außen, also von der Längsachse L weg, geprägt ist. Dabei beträgt der radiale Überstand U der Nase 18 über die Außenseite 17 des Grundkörpers 16 0,4 Millimeter, und somit ein Viertel der ersten Wanddicke tc. Am einbringseitigen Ende eines jeden der Grundkörper 16 ist ein Fortsatz 19 ausgebildet, mit einer gegenüber der ersten Wanddicke $t_G$ um einen Dickenunterschied dt reduzierten zweiten Wanddicke $t_F$. Im Ausführungsbeispiel beträgt der Dickenunterschied dt 0,8 Millimeter und somit beträgt die zweite Wanddicke $t_F$ ebenfalls 0,8 Millimeter. Der Übergang vom Grundkörper 16 zum Fortsatz 19 wird durch eine Durchmesserstufe 20 auf der Außenseite der Spreizhülse 3 gebildet, deren Höhe dem Dickenunterschied dt entspricht. Die Durchmesserstufe 20 verläuft orthogonal zur Längsachse L, das heißt, dass die Stufenfläche 21 in einer Radialebene der Längsachse L liegt, beziehungsweise dass ein Normalenvektor zur Stufenfläche 21 parallel zur Längsachse L verläuft. Die Stufenfläche 21 geht zur Außenseite 17 des Grundkörpers 16 als Außeneck mit einer ersten Kante 22 scharfkantig über, während sie zu einer Außenseite 23 des Fortsatzes 19 in einer Art Inneneck als Übergangsbereich 24 übergeht. Am einbringseitigen Ende der Außenseite 23 des Fortsatzes 19 ist eine zweite Kante 25 ebenfalls als scharfkantiges Außeneck ausgebildet. Der Fortsatz 19 weist eine Innenseite 26 auf, die parallel zur Außenseite 23 des Fortsatzes 19 verläuft und die mit einem zweiten Konuswinkel $W_F$ von ebenfalls 11 Grad zur Längsachse L geneigt ist. Dabei beträgt der parallel zur Längsachse L gemessene Abstand dL zwischen dem Grundkörper 16 und dem einbringseitig vorderen Ende des Fortsatzes 19 0,8 Millimeter und entspricht somit dem Dickenunterschied dt.

Die Nase 18 ist am Grundkörper 16 mit Abstand zum Fortsatz 19 angeordnet, damit die Nase 18 das Aufspreizen nicht behindert. Der Abstand A zwischen der Nase 18 und dem einbringseitig vorderen Ende des Fortsatzes 19 beträgt im Ausführungsbeispiel 12 Millimeter, wobei in diesem Fall das hintere Ende der Nase 18 maßgebend ist, da die Nase hier den radial größten Überstand über die Außenseite 17 des Grundkörpers 16 aufweist.

Der Spreizanker 1 ist aus Stahl hergestellt, wobei der Ankerbolzen 2 aus einem Draht durch Kaltummassivumformen und die Spreizhülse 3 aus einem Band im Stanzbiegeverfahren hergestellt ist. Sowohl der Ankerbolzen 2 wie auch die Spreizhülse 3 sind aus einem Stahl mit der Werkstoffnummer 1.4401 gemäß DIN EN 10088-1:2014-12 hergestellt. Da erfindungsgemäß zwischen dem Ankerbolzen 2 und der Spreizhülse 3 keine Gleitbeschichtung angeordnet ist und somit ein Verfahrensschritt bei der Herstellung zum Aufbringen der Gleitbeschichtung entfällt, ist der erfindungsgemäße Spreizanker 1 kostengünstig herstellbar.

Bezugszeichenliste

| 1 | Spreizanker |
|---|---|
| 2 | Ankerbolzen |
| 3 | Spreizhülse |
| 4 | Unterlegscheibe |
| 5 | Mutter |
| 6 | hinteres Ende des Ankerbolzens 2 |
| 7 | vorderes Ende des Ankerbolzens 2 |
| 8 | Schaft |
| 9 | Lastangriffsmittel |
| 10 | Spreizkörper |
| 11 | Halsabschnitt |
| 12 | Spreizabschnitt |
| 13 | Spreizsegment |
| 14 | Schlitz |
| 15 | ringförmiger Abschnitt |
| 16 | Grundkörper |
| 17 | Außenseite des Grundkörpers 16 |
| 18 | Nase |
| 19 | Fortsatz |
| 20 | Durchmesserstufe |
| 21 | Stufenfläche |
| 22 | erste Kante |
| 23 | Außenseite des Fortsatzes 19 |
| 24 | Übergangbereich |
| 25 | zweite Kante |
| 26 | Innenseite des Fortsatzes 19 |
| L | Längsachse |
| $W_S$ | erster Konuswinkel |
| $W_F$ | zweiter Konuswinkel |
| D | maximaler Durchmesser des Spreizabschnitts 12 |
| tc | erste Wanddicke (des Grundkörpers 16) |
| dt | Dickenunterschied |
| $t_F$ | zweite Wanddicke (des Fortsatzes 19) |
| dL | Abstand zwischen dem Grundkörper 16 und dem einbringseitig vorderen Ende des Fortsatzes 19 |
| A | Abstand der Nase 18 zum einbringseitig vorderen Ende des Fortsatzes 19 |
| U | radialer Überstand der Nase 18 über die Außenseite 17 des Grundkörpers 16 |

**Patentansprüche**

1. Spreizanker (1) aus Stahl mit einem Ankerbolzen (2), der sich entlang einer Längsachse (L) von einem hinteren Ende (6) zu einem einbringseitig vorderen Ende (7) erstreckt, wobei der Ankerbolzen (2) einen Schaft (8) mit einem Lastangriffsmittel (9) aufweist, an dem vor dem Lastangriffsmittel (9) ein Spreizkörper (10) des Ankerbolzens (2) zum Schaft (8) unbeweglich angeordnet ist, wobei der Spreizkörper (10) einen sich zum einbringseitigen vorderen Ende (7) des Ankerbolzens (2) hin mit einem ersten Konuswinkel ($W_S$) konisch bis zu einem maximalen Durchmesser (D) erweiternden Spreizabschnitt (12) aufweist,

   wobei der Spreizanker (1) eine Spreizhülse (3) aufweist, die am Ankerbolzen (2) angeordnet und durch eine Verschiebung des Ankerbolzens (2) relativ zur Spreizhülse (3) und einem resultierenden Einziehen des Spreizabschnitts (12) in die Spreizhülse (3) aufspreizbar ist,
   wobei zwischen dem Spreizkörper (10) und der Spreizhülse (3) keine Gleitbeschichtung angeordnet ist, und
   wobei die Spreizhülse (3) mehrere Spreizsegmente (13) aufweist, die jeweils einen Grundkörper (16) mit einer ersten Wanddicke ($t_G$) umfassen, an dem einbringseitig ein Fortsatz (19) mit einer gegenüber der ersten Wanddicke (tc) um einen Dickenunterschied (dt) reduzierten zweiten Wanddicke ($t_F$) angeordnet ist, wobei der Übergang vom Grundkörper (16) zum Fortsatz (19) durch eine Durchmesserstufe (20) auf der Außenseite der Spreizhülse (3) gebildet wird, die eine Höhe aufweist, die dem Dickenunterschied (dt) entspricht, und wobei der Fortsatz (19) auf seiner dem Ankerbolzen (2) zugewandten Innenseite (26) zumindest einbringseitig mit einem zweiten Konuswinkel ($W_F$) zur Längsachse (L) geneigt ist,

**dadurch gekennzeichnet,**
**dass** für den Abstand (dL) zwischen dem Grundkörper (16) und dem einbringseitig vorderen Ende des Fortsatzes (19) gilt:

$$dL \leq dt \: / \tan (W_S + W_F)$$

2. Spreizanker gemäß Anspruch 1, **dadurch gekennzeichnet, dass** gilt:

$$dL \geq (t_G - dt)$$

3. Spreizanker gemäß einem der vorstehenden Ansprüche, **dadurch gekennzeichnet, dass** gilt:

$$0{,}08 * D + 0{,}20 \: mm \leq t_G \leq 0{,}13 * D + 0{,}25 \: mm$$

4. Spreizanker gemäß einem der vorstehenden Ansprüche, **dadurch gekennzeichnet, dass** gilt:

$$0{,}26 * t_G + 0{,}03 \: mm \leq t_F \leq 0{,}60 * t_G + 0{,}30 \: mm$$

5. Spreizanker gemäß einem der vorstehenden Ansprüche, **dadurch gekennzeichnet, dass** gilt:

$$0{,}11° * D/mm + 8{,}83° \leq W_S \leq 0{,}17 * D/mm + 11{,}50°$$

6. Spreizanker gemäß einem der vorstehenden Ansprüche, **dadurch gekennzeichnet, dass** der Dickenunterschied (dt) zwischen der ersten Wanddicke (tc) und der zweiten Wanddicke ($t_F$) im Wesentlichen gleich groß wie der Abstand (dL) zwischen dem Grundkörper (16) und dem einbringseitig vorderen Ende des Fortsatzes (19) ist.

7. Spreizanker gemäß einem der vorstehenden Ansprüche, **dadurch gekennzeichnet, dass** der zweite Konuswinkel ($W_F$) des Fortsatzes (19) im Wesentlichen dem ersten Konuswinkel (Ws) des Spreizabschnitts (12) entspricht.

8. Spreizanker gemäß einem der vorstehenden Ansprüche, **dadurch gekennzeichnet, dass** der Fortsatz (19) eine zur Innenseite (26) parallele Außenseite (23) aufweist.

9. Spreizanker gemäß einem der vorstehenden Ansprüche, **dadurch gekennzeichnet, dass** der Spreizkörper (10) einstückig mit dem Schaft (8) ist.

10. Spreizanker gemäß einem der vorstehenden Ansprüche, **dadurch gekennzeichnet, dass** die Spreizhülse (3) eine Nase (18) aufweist, die am Grundkörper (16) angeordnet ist und die radial von einer Außenseite (17) des Grundköpers (16) absteht, wobei der Abstand (A) der Nase (18) zum einbringseitig vorderen Ende des Fortsatzes (19) größer oder gleich dem halben maximalen Durchmesser (D) des Spreizabschnitts (12) ist.

11. Spreizanker gemäß einem der vorstehenden Ansprüche, **dadurch gekennzeichnet, dass** für den ersten Konuswinkel (Ws) gilt:

$$W_S \leq 20°, \: insbesondere \: W_S \leq 15°$$

12. Spreizanker gemäß einem der vorstehenden Ansprüche, **dadurch gekennzeichnet, dass** für die Summe aus erstem Konuswinkel (Ws) und zweitem Konuswinkel ($W_F$) gilt:

$$(W_S + W_F) \leq 40°, \: insbesondere \: (W_S + W_F) \leq 30°$$

**Claims**

1. An expansion anchor (1) made of steel with an anchor bolt (2) which extends along a longitudinal axis (L) from a rear end (6) to a front end (7) on the insertion side, wherein the anchor bolt (2) has a shaft (8) with a load application means (9), on which an expansion body (10) of the anchor bolt (2) is arranged in front of the load application means (9) such that it cannot move relative to the shaft (8), wherein the expansion body (10) has an expansion portion (12) which widens conically toward the insertion-side front end (7) of the anchor bolt (2) at a first cone angle ($W_S$) up to a maximum diameter (D),

   wherein the expansion anchor (1) has an expansion sleeve (3) which is arranged on the anchor bolt (2) and is expandable by a displacement of the anchor bolt (2) relative to the expansion sleeve (3) and a resulting retraction of the expansion portion (12) into the expansion sleeve (3),
   wherein no sliding coating is arranged between the spreader body (10) and the spreader sleeve (3), and
   wherein the expansion sleeve (3) has a plurality of expansion segments (13), each of which comprises a base body (16) having a first wall thickness ($t_G$), on which an extension (19) having a second wall thickness ($t_F$) reduced by a thickness difference (dt) relative to the first wall thickness ($t_G$) is arranged on the insertion side, wherein the transition from the base body (16) to the extension (19) is formed by a diameter step (20) on the outside of the expansion sleeve (3), which has a height corresponding to the thickness difference (dt), and wherein the extension (19) on its inner side (26) facing the anchor bolt (2) is inclined at least on the insertion side at a second cone angle ($W_F$) to the longitudinal axis (L),
   **characterized**
   **in that** the distance (dL) between the base body (16) and the insertion-side front end of the extension (19) applies:

$$dL \leq dt \,/\, \tan (W_S + W_F)$$

2. The expansion anchor according to claim 1, **characterized in that** the following applies:

$$dL \geq (t_G - dt)$$

3. The expansion anchor according to any of the preceding claims, **characterized in that** the following applies:

$$0.08 * D + 0.20 \text{ mm} \leq t_G \leq 0.13 * D + 0.25 \text{ mm}$$

4. The expansion anchor according to any of the preceding claims, **characterized in that** the following applies:

$$0.26 * t_G + 0.03 \text{ mm} \leq t_F \leq 0.60 * t_G + 0.30 \text{ mm}$$

5. The expansion anchor according to any of the preceding claims, **characterized in that** the following applies:

$$0.11° * D/\text{mm} + 8.83° \leq W_S \leq 0.17 * D/\text{mm} + 11.50°$$

6. The expansion anchor according to one of the preceding claims, **characterized in that** the difference in thickness (dt) between the first wall thickness ($t_G$) and the second wall thickness ($t_F$) is substantially equal to the distance (dL) between the base body (16) and the insertion-side front end of the extension (19).

7. The expansion anchor according to any of the preceding claims, **characterized in that** the second cone angle ($W_F$) of the extension (19) substantially corresponds to the first cone angle ($W_S$) of the expansion portion (12).

8. The expansion anchor according to any of the preceding claims, **characterized in that** the extension (19) has an outer side (23) parallel to the inner side (26).

9. The expansion anchor according to any one of the preceding claims, **characterized in that** the expansion body (10) is integral with the shaft (8).

10. The expansion anchor according to any of the preceding claims, **characterized in that** the expansion sleeve (3) has a nose (18) which is arranged on the base body (16) and which projects radially from an outer side (17) of the base body (16), the distance (A) of the nose (18) from the insertion-side front end of the extension (19) being greater than or equal to half the maximum diameter (D) of the expansion portion (12).

11. The expansion anchor according to any of the preceding claims, **characterized in that** for the first cone angle (Ws) the following applies:

$$W_S \leq 20°, \text{ in particular } W_S \leq 15°.$$

12. The expansion anchor according to any of the preceding claims, **characterized in that** the sum of the first cone angle (Ws) and the second cone angle ($W_F$) applies:

$$(W_S + W_F) \leq 40°, \text{ in particular } (W_S + W_F) \leq 30°.$$

**Revendications**

1. Ancre extensible (1) en acier comportant un boulon d'ancrage (2), qui s'étend le long d'un axe longitudinal (L) depuis une extrémité arrière (6) jusqu'à une extrémité avant (7) côté insertion, dans laquelle le boulon d'ancrage (2) présente un arbre (8) comportant un moyen d'application de charge (9), sur lequel, devant le moyen d'application de charge (9), un corps extensible (10) du boulon d'ancrage (2) est agencé immobile par rapport à l'arbre (8), dans laquelle le corps extensible (10) présente une section extensible (12) s'élargissant de manière conique avec un premier angle de cône (Ws) jusqu'à un diamètre maximal (D) en direction de l'extrémité avant (7) côté insertion du boulon d'ancrage (2),

dans laquelle l'ancre extensible (1) présente une douille extensible (3), qui est agencée sur le boulon d'ancrage (2) et qui est extensible par un décalage du boulon d'ancrage (2) par rapport à la douille extensible (3) et une rétraction résultante de la section extensible (12) dans la douille extensible (3),
dans laquelle entre le corps extensible (10) et la douille extensible (3), aucun revêtement de glissement n'est agencé et
dans laquelle la douille extensible (3) présente plusieurs segments extensibles (13), qui comprennent respectivement un corps de base (16) avec une première épaisseur de paroi ($t_G$), sur lequel côté insertion un prolongement (19) est agencé avec une seconde épaisseur de paroi ($t_F$) réduite par rapport à la première épaisseur de paroi ($t_G$) d'une différence d'épaisseur (dt), dans laquelle la transition du corps de base (16) au prolongement (19) est formée par un gradin de diamètre (20) sur le côté extérieur de la douille extensible (3), qui présente une hauteur, qui correspond à la différence d'épaisseur (dt) et dans laquelle le prolongement (19) est incliné au moins côté insertion avec un second angle de cône ($W_F$) par rapport à l'axe longitudinal (L) sur son côté interne (26) tourné vers le boulon d'ancrage (2),
**caractérisée,**
**en ce que** pour la distance (dL) entre le corps de base (16) et l'extrémité avant côté insertion du prolongement (19) s'applique :

$$dL \leq dt \, / \tan (W_S + W_F)$$

2. Ancre extensible selon la revendication 1, **caractérisée en ce que** s'applique :

$$dL \geq (t_G - dt)$$

3. Ancre extensible selon l'une des revendications précédentes, **caractérisée en ce que** s'applique :

$$0,08 * D + 0,20 \text{ mm} \leq t_G \leq 0,13 * D + 0,25 \text{ mm}$$

4. Ancre extensible selon l'une des revendications précédentes, **caractérisée en ce que** s'applique :

$$0{,}26 * t_G + 0{,}03 \text{ mm} \leq t_F \leq 0{,}60 * t_G + 0{,}30 \text{ mm}$$

5. Ancre extensible selon l'une des revendications précédentes, **caractérisée en ce que** s'applique :

$$0{,}11° * D/\text{mm} + 8{,}83° \leq W_S \leq 0{,}17 * D/\text{mm} + 11{,}50°$$

6. Ancre extensible selon l'une des revendications précédentes, **caractérisée en ce que** la différence d'épaisseur (dt) entre la première épaisseur de paroi ($t_G$) et la seconde épaisseur de paroi ($t_F$) est essentiellement aussi grande que la distance (dL) entre le corps de base (16) et l'extrémité avant côté insertion du prolongement (19).

7. Ancre extensible selon l'une des revendications précédentes, **caractérisée en ce que** le second angle de cône ($W_F$) du prolongement (19) correspond essentiellement au premier angle de cône (Ws) de la section extensible (12).

8. Ancre extensible selon l'une des revendications précédentes, **caractérisée en ce que** le prolongement (19) présente un côté externe (23) parallèle au côté interne (26).

9. Ancre extensible selon l'une des revendications précédentes, **caractérisée en ce que** le corps extensible (10) forme une seule pièce avec l'arbre (8).

10. Ancre extensible selon l'une des revendications précédentes, **caractérisée en ce que** la douille extensible (3) présente un nez (18), qui est agencé sur le corps de base (16) et qui dépasse radialement d'un côté externe (17) du corps de base (16), dans laquelle la distance (A) du nez (18) à l'extrémité avant côté insertion du prolongement (19) est supérieure ou égale à la moitié du diamètre maximal (D) de la section extensible (12).

11. Ancre extensible selon l'une des revendications précédentes, **caractérisée en ce que** pour le premier angle de cône (Ws) s'applique :

$$W_S \leq 20°, \text{ en particulier } W_S \leq 15°$$

12. Ancre extensible selon l'une des revendications précédentes, **caractérisée en ce que** pour la somme du premier angle de cône (Ws) et du second angle de cône ($W_F$) s'applique :

$$(W_S + W_F) \leq 40°, \text{ en particulier } (W_S + W_F) \leq 30°$$

Fig. 1

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0514342 A1
- DE 102017121232 A1